# EUROPEAN PATENT SPECIFICATION

(11) **EP 3 552 937 B1**
(45) Date of publication and mention of the grant of the patent: **24.02.2021**
(21) Application number: 19163612.5
(22) Date of filing: 19.03.2019
(51) Int. Cl.: B62J 11/19, B62K 19/40

(54) **SADDLE TYPE VEHICLE**
SATTELFAHRZEUG
VÉHICULE DE TYPE À SELLE

(30) Priority: 02.04.2018 JP 2018071032
(43) Date of publication of application: 16.10.2019
(73) Proprietor: Honda Motor Co., Ltd., Tokyo 107-8556 (JP)
(72) Inventor: Nakada, Naoki, Saitama, 351-0193 (JP); Saravichai, Rungroj, 10520 Bangkok (TH); Masuda, Gota, Saitama, 351-0193 (JP)
(74) Representative: Beder, Jens

(56) References cited:
- WO-A1-2017/168716
- JP-A- H0 672 378
- JP-A- H06 247 374
- JP-A- 2006 182 315
- US-A1- 2015 210 339

## Description

### [TECHNICAL FIELD]

The present invention relates to a saddle type vehicle including: a body frame; a connection member connected to the body frame and supporting a swing shaft extending in parallel to an axle of a rear wheel; a swing-type power unit that includes a crankcase supporting a crankshaft rotatably around a rotational axis, the crankcase being integrally formed with a bearing body rotatably connected to the swing shaft, the power unit swinging relative to the body frame; and a rotary electric machine that is disposed in a generator chamber separated from a crank chamber and partly partitioned off by the crankcase, generates electric power according to rotation of the crankshaft, and drives the crankshaft according to supply of an electric current.

### [BACKGROUND ART]

Patent Document 1 discloses an alternate current (AC) generator (ACG) starter that generates electric power according to rotation of a crankshaft and drives the crankshaft around a rotational axis according to supply of an electric current. A control unit disposed in a generator chamber separated from the crank chamber and partitioned off by a crankcase is connected to the ACG starter. The control unit functions to control the operation of the ACG starter. The document JP 2006 182315 A discloses a saddle type vehicle according to the preamble of claim 1.

### [PRIOR ART DOCUMENT]

### [PATENT DOCUMENT]

[Patent Document 1] Japanese Patent Application Laid-open No. 2013-72358

### [SUMMARY OF THE INVENTION]

### [PROBLEM TO BE SOLVED BY THE INVENTION]

However, in Patent Document 1, the control unit is disposed between an outer wall of the crankcase and a stator of the ACG starter; therefore, the stator of the ACG starter is spaced away from the outer wall of the crankcase, leading to enlargement of the power unit in size. On the other hand, the swing-type power unit swings relative to the body frame; therefore, in the case where the control unit is disposed on the body frame, it is desired to restrain movement of a harness that connects the ACG starter to the control unit.

The present invention has been made in consideration of the above-mentioned circumstances. It is an object of the present invention to provide a saddle type vehicle in which movement of a harness connected to a rotary electric machine can be restrained, while avoiding enlargement of a power unit in size.

### [MEANS FOR SOLVING THE PROBLEM]

In accordance with a first aspect of the present invention, there is provided a saddle type vehicle comprising: a body frame; a connection member that is connected to the body frame and supports a swing shaft extending in parallel to an axle of a rear wheel; a swing type power unit that includes a crankcase supporting a crankshaft rotatably around a rotational axis, the crankcase being integrally formed with a bearing body rotatably connected to the swing shaft above the rotational axis of the crankshaft, the power unit swinging relative to the body frame; and a rotary electric machine that is disposed in a generator chamber separated from a crank chamber and partly partitioned off by the crankcase, generates electric power according to rotation of the crankshaft, and drives the crankshaft according to supply of an electric current, characterized in that the vehicle further comprises harnesses that are connected to the rotary electric machine and led out from a front side or a rear side of the bearing body to outside of the crankcase.

And also in configuration of the first aspect, the harnesses are led out to the outside of the crankcase by penetrating a guide piece connected to the bearing body from the front side or the rear side.

In accordance with a second aspect of the present invention, in addition to the configuration in the first aspect, the guide piece is disposed on an outer wall of the crankcase between the bearing body and a cylinder block.

In accordance with a third aspect of the present invention, in addition to the configuration of the second aspect, the guide piece includes: a first body that spreads along a peripheral direction around the rotational axis of the crankshaft and supports a first grommet guiding at least one lead wire of the harnesses; and a second body that is bent from the first body, spreads along a mating surface of the crankcase and the cylinder block, and supports a second grommet guiding at least one lead wire of the harnesses.

In accordance with a fourth aspect of the present invention, in addition to the configuration of any one of the first to third aspects, the connection member includes: a lateral body extending in a direction parallel to the swing shaft at a position spaced upward from the swing shaft; and a side body extending forward from the lateral body at a position spaced from the bearing body in an axial direction of the swing shaft, the side body being connected to the body frame rotatably around an axis parallel to the swing shaft.

In accordance with a fifth aspect of the present invention, in addition to the configuration of any one of the first to fourth aspects, there is the saddle type vehicle, further comprising: a cooling fan that is disposed on a rotor of the rotary electric machine and has blades producing an airflow in a centrifugal direction around the rotational axis; and a plate member that is disposed between an outer wall of the crankcase and the rotor, spreads along an imaginary plane orthogonal to the rotational axis to an outer side of an outer periphery of the cooling fan, and clamps the harnesses between the plate member and the outer wall of the crankcase.

### [EFFECTS OF THE INVENTION]

According to the first aspect, the harnesses connected to the rotary electric machine are led out to the outside of the crankcase; therefore, the control unit controlling the operation of the rotary electric machine can be disposed outside of the generator chamber, and, accordingly, enlargement of the power unit in size can be avoided. Moreover, since the harnesses are led out to the outside of the crankcase from the front side or the rear side of the bearing body forming a center of swinging, movement of the harnesses can be minimized even when the power unit swings.

According to the first aspect, the harnesses penetrate the guide piece connected to the bearing body from the front side or the rear side; therefore, displacement of the harnesses relative to the bearing body can be restrained. The positional relation between the bearing body and the harnesses can be kept favorable even when the power unit swings.

According to the second aspect, the crankcase forms a cylindrical outer wall such as to come away from the body frame in going toward the cylinder block; therefore, efficient utilization of space can be realized in the surroundings of the crankcase.

According to the third aspect, the second body is bent from the first body and spreads along the mating surface of the crankcase and the cylinder block; therefore, enlargement of the crankcase in the direction of the cylinder axis is avoided, and, as a result, enlargement of the power unit in size can be obviated.

According to the fourth aspect, the guide piece guiding the harnesses is disposed between side bodies of the connection member in the transverse direction; therefore, the guide piece can be hidden by the side bodies in vehicle side view as observed from a viewpoint set at infinity of the swing shaft. Design quality of the saddle type vehicle can be enhanced.

According to the fifth aspect, the plate member isolates the airflow generated by the cooling fan from the harnesses; therefore, distribution of the airflow is not hindered, the cooling airflow can flow smoothly to the cylinder block and the cylinder head.

### [BRIEF DESCRIPTION OF THE DRAWINGS]

[FIG. 1] FIG. 1 is a side view depicting schematically a general image of a two-wheeled motor vehicle according to an embodiment of the present invention.
[FIG. 2] FIG. 2 is an enlarged partial perspective view depicting schematically a connection relationship between a power unit and a body frame.
[FIG. 3] FIG. 3 is an enlarged side view of a major part of FIG. 1.
[FIG. 4] FIG. 4 is an enlarged sectional view taken along line 4-4 of FIG. 1.
[FIG. 5] FIG. 5 is an enlarged side view of a power unit, depicting schematically the structure of a cooling fan and a peripheral wall.
[FIG. 6] FIG. 6 is an enlarged side view of the power unit, depicting schematically the structure of an ACG starter.
[FIG. 7] FIG. 7 is an enlarged side view of a crankcase, depicting schematically a connection relationship between the ACG starter and a harness.
[FIG. 8] FIG. 8 is an enlarged side view of the crankcase, depicting schematically a relationship between a guide piece and the harnesses.
[FIG. 9] FIG. 9 is an enlarged plan view of a swing shaft and the guide piece.

### [MODE FOR CARRYING OUT THE INVENTION]

An embodiment of the present invention will be described below, referring to the attached drawings. Note that in the following description, the forward, rearward, upward, downward, leftward and rightward directions are the directions as viewed from a rider riding a two-wheeled motor vehicle.

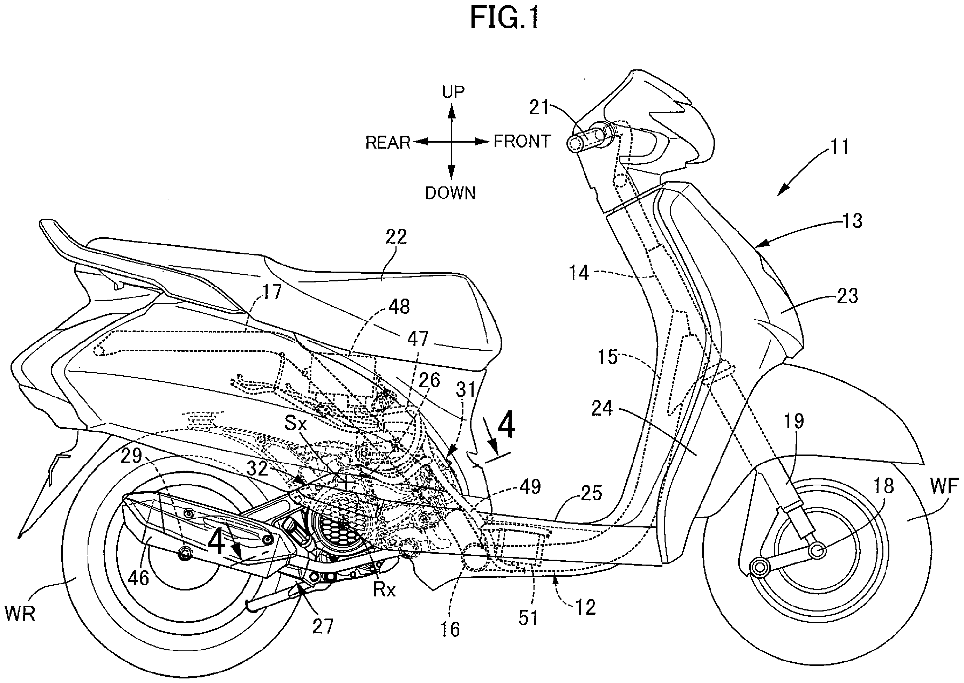

FIG. 1 depicts schematically a scooter type two-wheeled motor vehicle according to an embodiment of a saddle type vehicle. A two-wheeled motor vehicle 11 includes a body frame 12, and a body cover 13 mounted to the body frame 12. The body frame 12 includes: a head pipe 14 at a front end thereof; a main frame 15 connected to the head pipe 14 at its front end; a cross pipe 16 connected to a rear portion of the main frame 15 and extending in the transverse direction (vehicle width direction); and a pair of left and right rear frames 17 having their front ends connected respectively to both end portions of the cross pipe 16 and extending in the longitudinal vehicle direction. Front forks 19 supporting a front wheel WF such as to be rotatable around an axle 18 and a steering handle 21 are steerably supported on the head pipe 14.

On the body cover 13, a rider's seat 22 is mounted on the upper side of the rear frames 17. The body cover 13 includes a front cover 23 covering the head pipe 14 from the front side, a leg shield 24 continuous with the front cover 23, and a step floor 25 continuous with a lower end of the leg shield 24 and disposed on the upper side of the main frame 15 between the rider's seat 22 and the front wheel WF.

A unit swing type power unit (unit swing engine) 27 connected to the body frame 12 such as to be swingable around a swing shaft 26 relatively to the body frame 12 is disposed in a space under the rear frames 17. A rear wheel WR is supported at a rear end of the power unit 27 such as to be rotatable around an axle 29. The swing shaft 26 has an axis Sx parallel to the axis of the axle 29 (a rotational axis of the rear wheel WR). The power unit 27 includes an internal combustion engine 31 generating power around a rotational axis Rx, and a transmission system 32 that transmits the power generated by the internal combustion engine 31 to the axle 29 of the rear wheel WR. The swing shaft 26 is disposed above the rotational axis Rx (or a horizontal plane containing the rotational axis Rx). Details of the internal combustion engine 31 and the transmission system 32 will be described later.

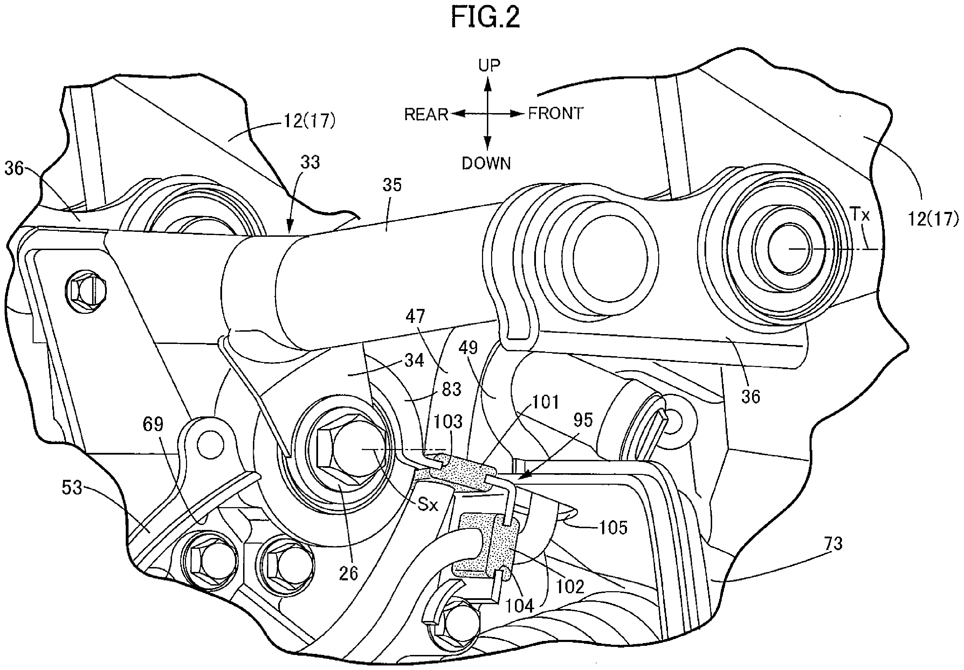

As illustrated in FIG. 2, a connection member 33 supporting the swing shaft 26 is connected to the body frame 12. The connection member 33 includes: a pair of left and right connection plates 34 that clamp therebetween the swing shaft 26 from the transverse direction and spread upward from the swing shaft 26 along a plane orthogonal to the axis of the swing shaft 26; a lateral tube body (lateral body) 35 extending in a direction parallel to the swing shaft 26 at a position spaced upward from the swing shaft 26 and connected to the connection plates 34; and side bodies 36 that extend forward from the lateral tube body 35 at positions respectively spaced to transverse-directionally outer sides from the individual connection plates 34 in the axial direction of the swing shaft 26 and that are connected to the body frame 12 such as to be rotatable around an axis Tx parallel to the axis of the swing shaft 26. In this way, the power unit 27 is connected to the body frame 12 by a link mechanism having two joints which are deviated from each other in the front-rear direction and in the vertical direction.

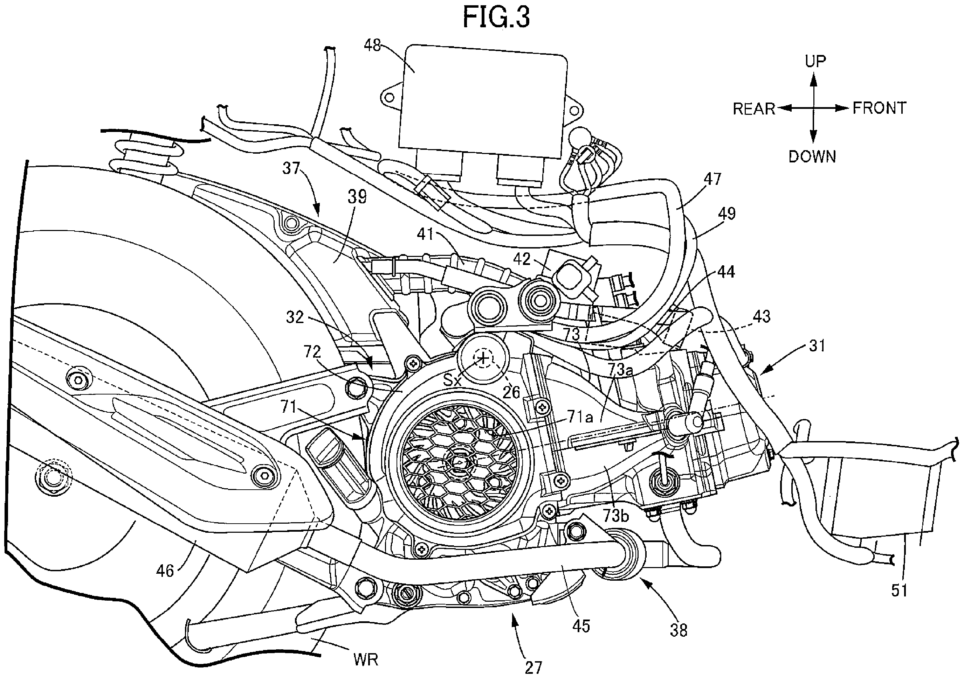

As depicted in FIG. 3, an intake device 37 that sucks in outside air used for producing an air-fuel mixture supplied to a combustion chamber and an exhaust device 38 that clarifies a combustion exhaust gas discharged from the combustion chamber and functions to silence the internal combustion engine 31 are connected to the internal combustion engine 31. The intake device 37 includes, at least: an air cleaner 39 that is connected to the internal combustion engine 31 from above and sucks and clarifies outside air; a throttle body 42 that is connected to a connecting tube 41 extending from the air cleaner 39 and controls the flowing quantity of air by the function of a throttle valve; and an intake tube 44 that connects the throttle body 42 to the internal combustion engine 31 and causes a fuel injection device 43 to front on a passage of air. The exhaust device 38 includes: an exhaust pipe 45 that is mounted to the internal combustion engine 31 from below, extends rearward on the lower side of the internal combustion engine 31, and holds a catalyst for clarifying the exhaust gas; and a silencer 46 that is connected to a downstream end of the exhaust pipe 45 and silences the exhaust sound of the internal combustion engine 31.

The two-wheeled motor vehicle 11 includes: a battery 48 that is supported by the body frame 12 under the rider's seat 22 and is connected to the internal combustion engine 31 by a first harness 47; and an electronic control unit (ECU) 51 that is incorporated in the step floor 25 and is connected to the internal combustion engine 31 by a second harness 49. Electric power generated by the internal combustion engine 31 is supplied to and accumulated in the battery 48. The electric power is supplied to individual electric parts from the battery 48. The ECU 51 controls various functions of the power unit 27 based on sensor signals supplied from the power unit 27.

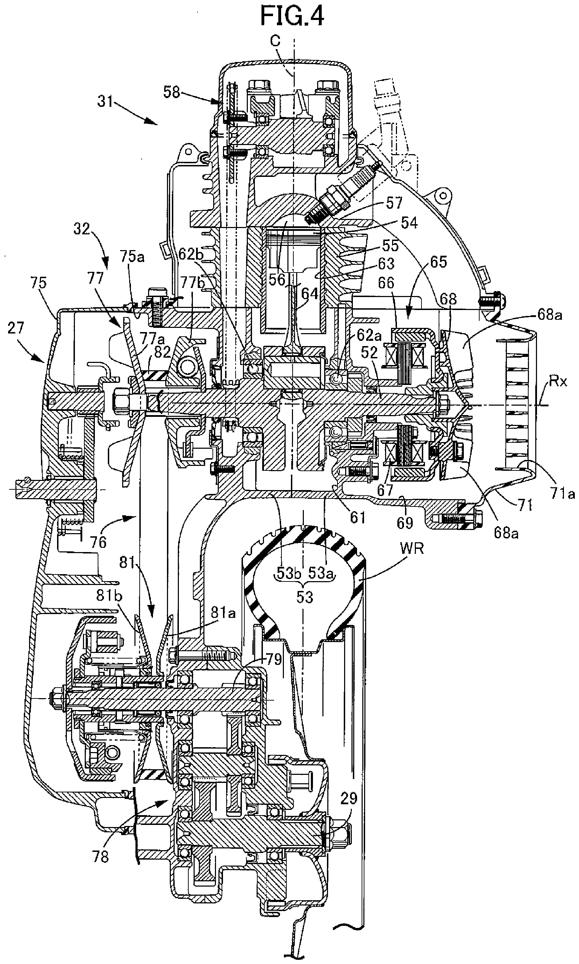

As illustrated in FIG. 4, the internal combustion engine 31 includes: a crankcase 53 that supports a crankshaft 52 rotatably around the rotational axis Rx; a cylinder block 55 that is connected to the crankcase 53 and guides a linear reciprocating motion of a piston 54 along a cylinder axis C; a cylinder head 57 that is connected to the cylinder block 55 and defines a combustion chamber 56 between itself and the piston 54; and a head cover 59 that is connected to the cylinder head 57 and supports a valve train 58 between itself and the cylinder head 57.

The crankcase 53 is divided into a first case half 53a and a second case half 53b. The first case half 53a and the second case half 53b cooperate with each other in partitioning a crank chamber 61. A crank of the crankshaft 52 is accommodated in the crank chamber 61. A bearing 62a supporting the crankshaft 52 rotatably is assembled into the first case half 53a. A bearing 62b supporting the crankshaft 52 rotatably is assembled into the second case half 53b.

A cylinder bore 63 is defined in the cylinder block 55. The piston 54 is slidably fitted in the cylinder bore 63. The piston 54 is connected to the crank of the crankshaft 52 by a connecting rod 64. The linear reciprocating motion of the piston 54 is converted into a rotating motion of the crankshaft 52. The cylinder axis C is inclined slightly forwardly upward from the horizontal. The air-fuel mixture is introduced into the combustion chamber 56 through the intake device 37. The exhaust gas in the combustion chamber 56 is released through the exhaust device 38.

An AC generator (ACG) starter (rotary electric machine) 65 is connected to one end of the crankshaft 52. The ACG starter 65 includes: a tubular rotor 66 fixed to one end of the crankshaft 52 protruding from a first side (an outer surface of the first case half 53a) of the crankcase 53; and a stator 67 disposed around the crankshaft 52 while being surrounded by the rotor 66. The stator 67 is fixed to the first case half 53a. The ACG starter 65 generates electric power according to relative rotation of the rotor 66 and the stator 67. Details of the ACG starter 65 will be described later.

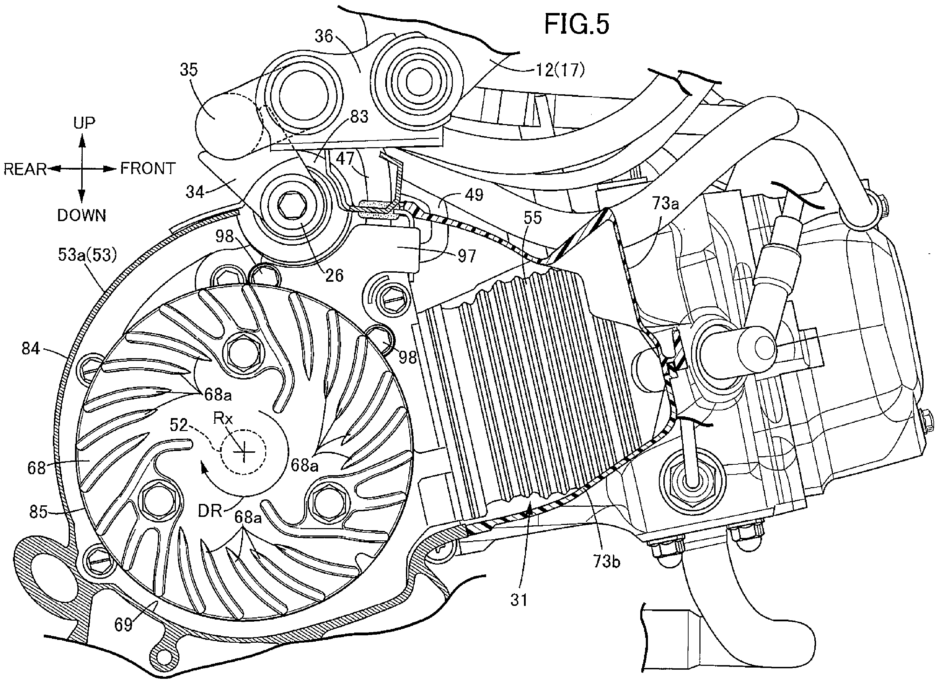

A cooling fan 68 is fixed to the rotor 66 of the ACG starter 65 coaxially with the crankshaft 52. As depicted in FIG. 5, the cooling fan 68 includes a plurality of blades 68a extending in centrifugal directions from the rotational axis Rx of the crankshaft 52, and constitutes a so-called centrifugal fan. The cooling fan 68 sucks in air along the rotational axis Rx of the crankshaft 52, and produces airflows in the centrifugal directions around the rotational axis Rx.

An air guide cover 71 that forms a generator chamber 69 accommodating the ACG starter 65 between itself and an outer surface of the first case half 53a and guides the air flows of the cooling fan 68 along an outer wall (cooling fins) of the cylinder block 55 is connected to the first case half 53a. An air guiding-in port 71a is defined in the air guide cover 71 at a position for facing one end of the crankshaft 52.

Here, as illustrated in FIG. 3, the air guide cover 71 includes: a crankcase cover 72 that is fixed to the first case half 53a to form the generator chamber 69 between itself and an outer surface of the first case half 53a and defines the air guiding-in port 71a; and a cylinder block cover 73 that is connected to the crankcase cover 72, is fixed to the cylinder block 55 and the cylinder head 57, and forms an air duct between itself and an outer surface of the cylinder block 55. The cylinder block cover 73 includes: an upper cover body 73a covering the upper side of the cylinder block 55 and the cylinder head 57; and a lower cover body 73b connected to the upper cover body 73a and covering the lower side of the cylinder block 55 and the cylinder head 57.

As depicted in FIG. 4, the power transmission system 32 includes a power transmission case 75 defining a transmission chamber 75a, and a V belt-type continuously variable transmission (hereinafter referred to as "transmission") 76 which is accommodated in the transmission chamber 75a and by which the rotational power transmitted from the crankshaft 52 is speed-changed in a stepless manner (continuously variable manner). Inside the power transmission case 75, a V belt 82 is wrapped around a driving pulley 77 attached to the crankshaft 52 serving as a driving shaft and a driven pulley 81 attached to a driven shaft 79 connected to the axle 29 of the rear wheel WR through a speed reduction gear mechanism 78. By the function of the V belt 82, the rotational power of the crankshaft 52 is transmitted to the driven shaft 79. The rotational power of the driven shaft 79 is transmitted to the axle 29 of the rear wheel WR through speed reduction.

The driving pulley 77 includes a fixed sheave 77a fixed to the crankshaft 52, and a moving sheave 77b that is supported by the crankshaft 52 such as to be movable in the axial direction of the crankshaft 52 while facing the fixed sheave 77a. The V belt 82 is clamped between the fixed sheave 77a and the moving sheave 77b. Similarly, the driven pulley 81 includes a fixed sheave 81a coaxially mounted to the driven shaft 79, and a moving sheave 81b that is coaxially mounted to the driven shaft 79 while facing the fixed sheave 81a. The V belt 82 is clamped between the fixed sheave 81a and the moving sheave 81b. At the driving pulley 77, the belt wrapping radius is controlled variably. The belt wrapping radius at the driven pulley 81 varies according to a variation in the belt wrapping radius at the driving pulley 77. In this way, the ratio of transmission from the crankshaft 52 to the driven shaft 79 is changed in a stepless manner (continuously variable manner).

As illustrated in FIG. 5, the first case half 53a of the crankcase 53 is integrally formed with a bearing body 83 that is connected to the swing shaft 26 rotatably on the upper side in the gravity direction than the rotational axis Rx of the crankshaft 52. One end of the swing shaft 26 is accepted into the bearing body 83 through a rubber bush. Here, the bearing body 83 is located at an uppermost position of the crankcase 53 when the power unit 27 is connected to the body frame 12 in a posture in which the cylinder axis C is laid slightly forwardly upward from a horizontal plane. An outer wall of the first case half 53a is formed with a peripheral wall 84 that projects in the axial direction of the crankshaft 52 along an outer periphery of the outer wall continuously from the bearing body 83 and partitions off the generator chamber 69. The peripheral wall 84 describes a curved surface that comes away in a centrifugal direction from an orbital surface 85 described by outer ends of the blades 68a during rotation of the cooling fan 68, in being displaced in a rotating direction DR of the cooling fan 68 from a lowermost position of the crankcase 53. Therefore, the airflows of the cooling fan 68 which are released in the centrifugal directions are guided toward the cylinder block 55 on the front side by the function of the peripheral wall 84.

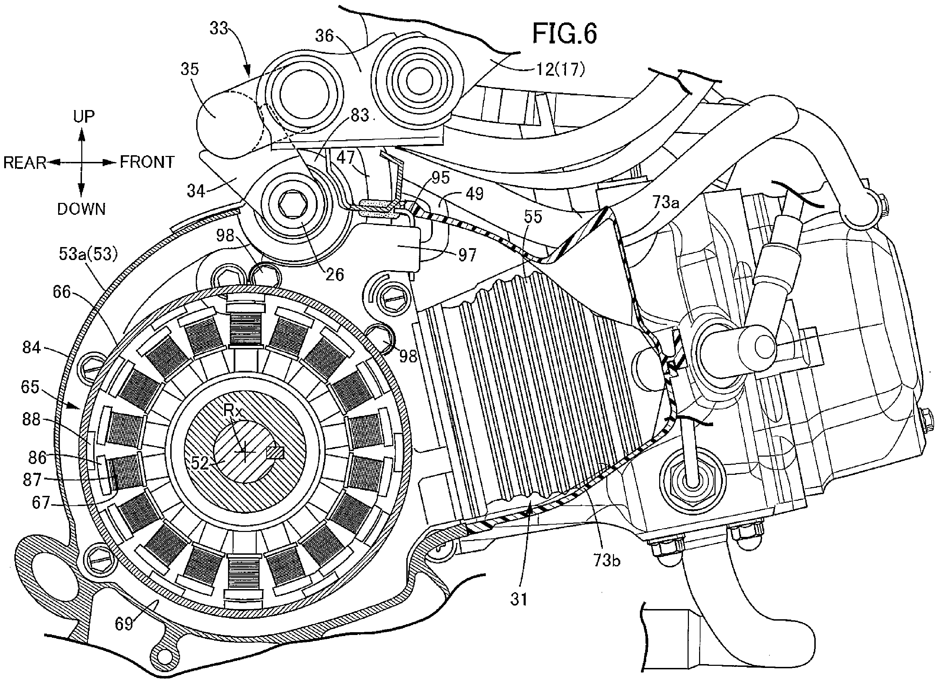

As depicted in FIG. 6, the stator 67 of the ACG starter 65 is configured in a so-called three-phase Y type connection, and includes a plurality of stator cores 86 arranged at regular intervals around the crankshaft 52, and coils 87 wound around the stator cores 86 on the basis of a U phase, a V phase and a W phase. The rotor 66 includes a plurality of magnets 88 arranged in an annular pattern and at regular intervals around the crankshaft 52 on the outside of the stator cores 86 in the radial direction around the crankshaft 52. In the rotor 66, the magnets each having an S pole on the radially inner side and an N pole on the radially outer side and the magnets each having an N pole on the radially inner side and an S pole on the radially outer side are alternately arranged in the peripheral direction.

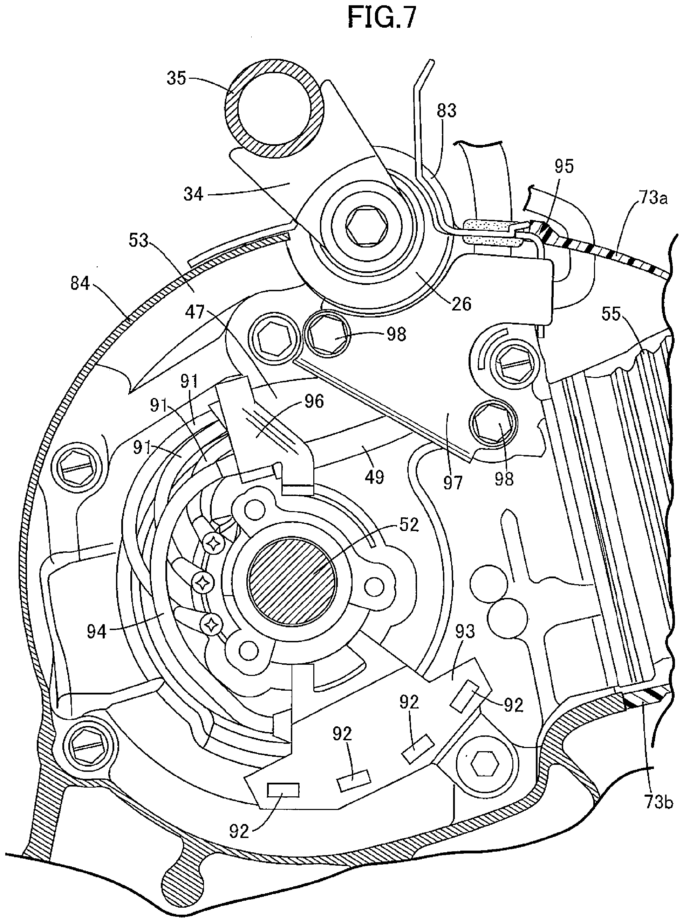

As illustrated in FIG. 7, the first harness 47 accommodates lead wires 91 connected on the basis of connection terminals 89 in three routes of the U phase, the V phase and the W phase of the stator 67. The second harness 49 accommodates a lead wire 94 connected to a sensor substrate 93 on which to mount a magnetic sensor 92 for detecting the rotational angle position of the rotor 66. The first harness 47 and the second harness 49 penetrate a guide piece 95 connected to the bearing body 83, and is led out from the peripheral wall 84 of the crankcase 53 to the outside. The guide piece 95 is disposed on an outer wall of the crankcase 53 between the bearing body 83 and the cylinder block 55. Here, the guide piece 95 is united to the bearing body 83 and is formed as a part of the crankcase 53.

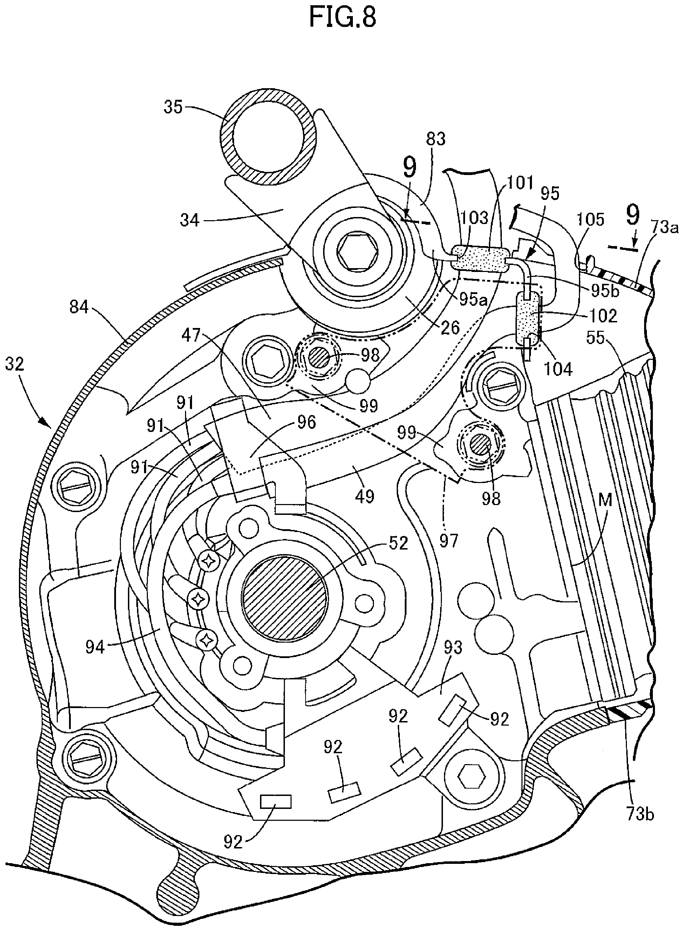

A first presser member 96 and a second presser member 97 for holding the first harness 47 and the second harness 49 along the outer wall of the crankcase 53 are fixed to the outer wall of the crankcase 53. The first presser member 96 is disposed between the outer wall of the crankcase 53 and the rotor 66, and presses tips of the first harness 47 and the second harness 49 toward the outer wall of the crankcase 53 on the upper side of the crankshaft 52. The second presser member 97 is disposed between the outer wall of the crankcase 53 and the rotor 66, and presses the first harness 47 and the second harness 49 toward the outer wall of the crankcase 53 between the first presser member 96 and the guide piece 95. As the second presser member 97, there is used a plate member that spreads along an imaginary plane orthogonal to the rotational axis Rx to the outer side than the outer periphery of the cooling fan 68, while following the outer periphery of the bearing body 83 on the inside of the peripheral wall 84. The second presser member 97 is fixed to the outer wall of the crankcase 53 by a pair of bolts 98. As depicted in FIG. 8, the individual bolts 98 are screwed into bosses 99 projecting from the outer wall of the crankcase 53. The first harness 47 and the second harness 49 are disposed between the two bosses 99. In this way, displacement of the first harness 47 and the second harness 49 is restricted in the peripheral direction and the axial direction of the crankshaft 52.

As illustrated in FIG. 8, the guide piece 95 includes: a first body 95a that spreads along the peripheral direction around the rotational axis Rx of the crankshaft 52 and supports a first grommet 101 for guiding the first harness 47; and a second body 95b that is bent from the first body 95a, spreads along the mating surface M of the crankcase 53 and the cylinder block 55, and supports a second grommet 102 for guiding the second harness 49. The first body 95a and the second body 95b are substantially orthogonal to each other.

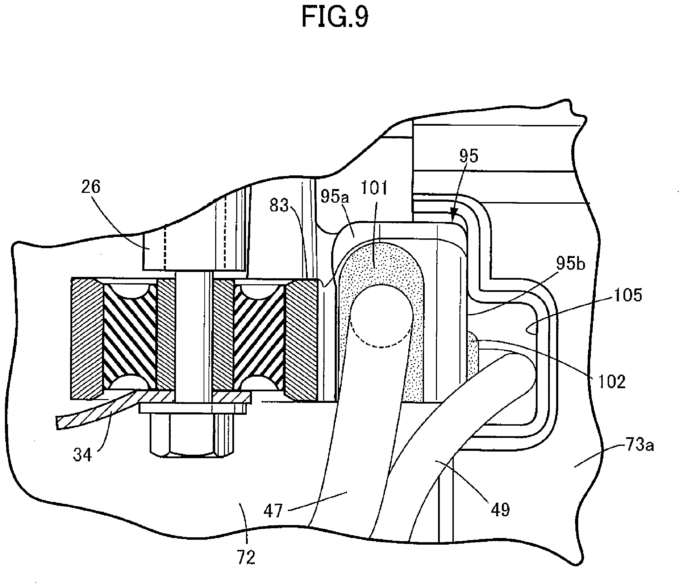

The first body 95a is formed with a cutout 103 for accepting the first grommet 101. As depicted in FIG. 9, an open end of the cutout 103 is closed by the crankcase cover 72. The crankcase cover 72 prevents the first grommet 101 from being disengaged from the cutout 103. Similarly, the second body 95b is formed with a cutout 104 for accepting the second grommet 102. An open end of the cutout 104 is closed by the second presser member 97. The second presser member 97 prevents the second grommet 102 from being disengaged from the cutout 104. As illustrated in FIG. 9, the cylinder block cover 73 is formed at an edge thereof with a cutout 105 that defines a passage for the second harness 49 between itself and the guide piece 95.

An operation of the power unit 27 according to the present embodiment will be described below. When the piston 54 performs a linear reciprocating motion, the crankshaft 52 is rotated around the rotational axis Rx. The rotor 66 of the ACG starter 65 is rotated. The magnets 88 of the rotor 66 are displaced relative to the coils 87 of the stator 67. As a result, the ACG starter 65 generates electric power. The electric power thus generated is sent through the first harness 47 to the battery 48. The battery 48 accumulates the electric power.

The rotation of the crankshaft 52 produces rotation of the cooling fan 68. Airflows are generated in the centrifugal directions. The cooling airflows thus generated are guided by the peripheral wall 84 and flow toward the cylinder block 55. Since the second presser member 97 isolates the cooling airflows flowing along the peripheral wall 84 from the first harness 47 and the second harness 49, the distribution of the cooling airflows is not hindered, and the cooling airflows flow smoothly toward the cylinder block 55 and the cylinder head 57. In this way, the cylinder block 55 and the cylinder head 57 are cooled effectively.

At the time of starting the internal combustion engine 31, the ECU 51 detects the rotational angle position of the rotor 66. Based on the rotational angle position detected, the ECU 51 supplied electric power from the battery 48 to the ACG starter 65. Magnetic forces are generated in the coils 87 of the stator 67 according to the distribution of an electric current, and relative rotation is brought about between the stator 67 and the rotor 66. In this way, the crankshaft 52 is rotated. The linear reciprocating motion of the piston 54 is started. A combustion operation is carried out at a timing controlled by the ECU 51. In detecting the rotational angle position, the ECU 51 is supplied with a sensor signal of the magnetic sensor 92 from the second harness 49.

During running of the two-wheeled motor vehicle 11, the power unit 27 swings around the swing shaft 26 according to an acceleration or deceleration and ruggedness (projections and recesses) of the road surface. Since the first harness 47 and the second harness 49 connected to the ACG starter 65 are led out to the outside of the crankcase 53, the ECU 51 controlling the operation of the ACG starter 65 can be disposed outside of the generator chamber 69, and, therefore, enlargement of the power unit 27 in size is avoided. Moreover, since the first harness 47 and the second harness 49 are led out from the front side of the bearing body 83, forming a center of swinging, to the outside of the crankcase 53, movements of the first harness 47 and the second harness 49 are minimized even when the power unit 27 swings. Moreover, since the first harness 47 and the second harness 49 penetrate the guide piece 95 connected to the bearing body 83 from the front side, displacement of the first harness 47 and the second harness 49 relative to the bearing body 83 is restrained. The positional relation between the bearing body 83 and the harnesses 47 and 49 is kept favorable even when the power unit 27 swings.

In the power unit 27 according to the present embodiment, the guide piece 95 is disposed on the peripheral wall 84 of the crankcase 53 between the bearing body 83 and the cylinder block 55. Since the crankcase 53 forms a cylindrical outer wall such as to come away from the rear frame 17 in going toward the cylinder block 55, efficient utilization of space can be realized in the surroundings of the crankcase 53.

The guide piece 95 includes: the first body 95a that spreads along the peripheral direction around the rotational axis Rx of the crankshaft 53 and supports the first grommet 101 for guiding the first harness 47; and the second body 95b that is bent from the first body 95a, spreads along the mating surface M of the crankcase 53 and the cylinder block 55, and supports the second grommet 102 for guiding the second harness 49. Since the second body 95b of the guide piece 95 is bent from the first body 95a and spreads along the mating surface M of the crankcase 53 and the cylinder block 55, enlargement of the crankcase 53 in size in the direction of the cylinder axis C is avoided, and, as a result, enlargement of the power unit 27 in size is obviated.

In the two-wheeled motor vehicle 11 according to the present embodiment, the connection member 33 includes: the lateral tube body 35 extending in a direction parallel to the swing shaft 26 at a position spaced upward from the swing shaft 26; and the side bodies 36 that extend forward from the lateral tube body 35 at positions spaced from the bearing body 83 in the axial direction of the swing shaft 26 and are connected to the body frame 12 such as to be rotatable around an axis parallel to the swing shaft 26. Since the first body 95a of the guide piece 95 guiding the first harness 47 is disposed between the side bodies 36 of the connection member 33 in the transverse direction, the first body 95a of the guide piece 95 is hidden by the side bodies 36 in vehicle side view as observed from a viewpoint set at infinity of the swing shaft 26. Design quality of the two-wheeled motor vehicle 11 is enhanced.

### [DESCRIPTION OF REFERENCE NUMERALS AND SYMBOLS]

11···Saddle type vehicle (Two-wheeled motor vehicle), 12···Body frame, 26···Swing shaft, 27···Power unit, 29···Axle (of rear wheel), 33···Connection member, 35···Lateral body (Lateral tube body), 36···Side body, 47···Harness (First harness), 49···Harness (Second harness), 52···Crankshaft, 53···Crankcase, 55vCylinder block, 61···Crank chamber, 65···Rotary electric machine (AC generator (ACG) starter), 66···Rotor, 68···Cooling fan, 68a···Blade, 69···Generator chamber, 83···Bearing body, 95···Guide piece, 95a···First body, 95b···Second body, 97···Plate member (Second presser member), 101···First grommet, 102···Second grommet, M···Mating surface, Rx···Rotational axis (of crankshaft), WR···Rear wheel.

## Claims

1. A saddle type vehicle comprising:
a body frame (12);
a connection member (33) that is connected to the body frame (12) and supports a swing shaft (26) extending in parallel to an axle (29) of a rear wheel (WR);
a swing type power unit (27) that includes a crankcase (53) supporting a crankshaft (52) rotatably around a rotational axis (Rx), the crankcase (53) being integrally formed with a bearing body (83) rotatably connected to the swing shaft (26) above the rotational axis (Rx) of the crankshaft (52), the power unit (27) swinging relative to the body frame (12); and
a rotary electric machine (65) that is disposed in a generator chamber (69) separated from a crank chamber (61) and partly partitioned off by the crankcase (53), generates electric power according to rotation of the crankshaft (52), and drives the crankshaft (52) according to supply of an electric current,
wherein the vehicle further comprises harnesses (47, 49) that are connected to the rotary electric machine (65) and led out from a front side or a rear side of the bearing body (83) to outside of the crankcase (53), and **characterised in that** the harnesses (47, 49) are led out to the outside of the crankcase (53) by penetrating a guide piece (95) connected to the bearing body (83) from the front side or the rear side.

2. The saddle type vehicle according to claim 1, wherein
the guide piece (95) is disposed on an outer wall of the crankcase (53) between the bearing body (83) and a cylinder block (55).

3. The saddle type vehicle according to claim 2, wherein
the guide piece (95) includes:
a first body (95a) that spreads along a peripheral direction around the rotational axis (Rx) of the crankshaft (52) and supports a first grommet (101) guiding at least one lead wire of the harnesses (47, 49); and
a second body (95b) that is bent from the first body (95a), spreads along a mating surface (M) of the crankcase (53) and the cylinder block (55), and supports a second grommet (102) guiding at least one lead wire of the harnesses (47, 49).

4. The saddle type vehicle according to any one of claims 1 to 3, wherein
the connection member (33) includes:
a lateral body (35) extending in a direction parallel to the swing shaft (26) at a position spaced upward from the swing shaft (26); and
a side body (36) extending forward from the lateral body (35) at a position spaced from the bearing body (83) in an axial direction of the swing shaft (26), the side body (36) being connected to the body frame (12) rotatably around an axis parallel to the swing shaft (26).

5. The saddle type vehicle according to any one of claims 1 to 4, further comprising:
a cooling fan (68) that is disposed on a rotor (66) of the rotary electric machine (65) and has blades (68a) producing an airflow in a centrifugal direction around the rotational axis (Rx); and
a plate member (97) that is disposed between an outer wall of the crankcase (53) and the rotor (66), spreads along an imaginary plane orthogonal to the rotational axis (Rx) to an outer side of an outer periphery of the cooling fan (68), and clamps the harnesses (47, 49) between the plate member (97) and the outer wall of the crankcase (53).

6. The saddle type vehicle according to any one of claims 1 to 5, wherein
the power unit (27) further comprises a cylinder block cover (73), which is formed at an edge thereof with a cutout (105) that allows passage of one of the harnesses (49) between itself and the guide piece (95).

## Patentansprüche

1. Fahrzeug vom Satteltyp, bestehend aus:
einem Karosserierahmen (12);
ein Verbindungselement (33), das mit dem Karosserierahmen (12) verbunden ist und eine Schwingenwelle (26) trägt, die sich parallel zu einer Achse (29) eines Hinterrades (WR) erstreckt;
eine Schwingenantriebseinheit (27), die ein Kurbelgehäuse (53) aufweist, das eine Kurbelwelle (52) um eine Drehachse (Rx) drehbar lagert, wobei das Kurbelgehäuse (53) einstückig mit einem Lagerkörper (83) ausgebildet ist, der oberhalb der Drehachse (Rx) der Kurbelwelle (52) drehbar mit der Schwingenwelle (26) verbunden ist, wobei die Antriebseinheit (27) relativ zu dem Karosserierahmen (12) schwingt; und
eine rotierende elektrische Maschine (65), die in einem von einem Kurbelraum (61) getrennten und teilweise durch das Kurbelgehäuse (53) abgetrennten Generatorraum (69) angeordnet ist, entsprechend der Drehung der Kurbelwelle (52) elektrische Energie erzeugt und die Kurbelwelle (52) entsprechend der Zufuhr eines elektrischen Stroms antreibt,
wobei
das Fahrzeug ferner Kabelbäume (47, 49) umfasst, die mit der rotierenden elektrischen Maschine (65) verbunden sind und von einer Vorderseite oder einer Rückseite des Lagerkörpers (83) zur Außenseite des Kurbelgehäuses (53) herausgeführt sind, und **dadurch gekennzeichnet, dass** die Kabelbäume (47, 49) durch Durchdringen eines mit dem Lagerkörper (83) verbundenen Führungsstücks (95) von der Vorderseite oder der Rückseite zur Außenseite des Kurbelgehäuses (53) herausgeführt sind.

2. Fahrzeug vom Satteltyp nach Anspruch 1, wobei
das Führungsstück (95) an einer Außenwand des Kurbelgehäuses (53) zwischen dem Lagerkörper (83) und einem Zylinderblock (55) angeordnet ist.

3. Fahrzeug vom Satteltyp nach Anspruch 2, wobei
das Führungsteil (95) umfasst:
einen ersten Körper (95a), der sich entlang einer Umfangsrichtung um die Drehachse (Rx) der Kurbelwelle (52) ausbreitet und eine erste Tülle (101) trägt, die mindestens einen Leitungsdraht der Kabelbäume (47, 49) führt; und
einen zweiten Körper (95b), der von dem ersten Körper (95a) abgewinkelt ist, sich entlang einer Eingriffsfläche (M) des Kurbelgehäuses (53) und des Zylinderblocks (55) ausbreitet und eine zweite Kabeltülle (102) trägt, die mindestens einen Leitungsdraht der Kabelbäume (47, 49) führt.

4. Fahrzeug vom Satteltyp nach einem der Ansprüche 1 bis 3, wobei
das Verbindungselement (33) umfasst:
einen Seitenkörper (35), der sich in einer Richtung parallel zur Schwingenwelle (26) an einer von der Schwingenwelle (26) nach oben beabstandeten Position erstreckt; und
einen Seitenkörper (36), der sich von dem Seitenkörper (35) an einer Position nach vorne erstreckt, die von dem Lagerkörper (83) in einer axialen Richtung der Schwingenwelle (26) beabstandet ist, wobei der Seitenkörper (36) mit dem Karosserierahmen (12) drehbar um eine Achse parallel zu der Schwingenwelle (26) verbunden ist.

5. Fahrzeug vom Satteltyp nach einem der Ansprüche 1 bis 4, ferner umfassend:
ein Kühlgebläse (68), das auf einem Rotor (66) der rotierenden elektrischen Maschine (65) angeordnet ist und Schaufeln (68a) aufweist, die einen Luftstrom in einer Zentrifugalrichtung um die Rotationsachse (Rx) erzeugen; und
ein Plattenelement (97), das zwischen einer Außenwand des Kurbelgehäuses (53) und dem Rotor (66) angeordnet ist, sich entlang einer imaginären Ebene orthogonal zur Drehachse (Rx) zu einer Außenseite eines Außenumfangs des Kühlgebläses (68) erstreckt und die Kabelbäume (47, 49) zwischen dem Plattenelement (97) und der Außenwand des Kurbelgehäuses (53) einklemmt.

6. Fahrzeug vom Satteltyp nach einem der Ansprüche 1 bis 5, wobei
das Triebwerk (27) weiterhin eine Zylinderblockabdeckung (73) umfasst, die an einem Rand davon mit einem Ausschnitt (105) ausgebildet ist, der den Durchgang eines der Kabelbäume (49) zwischen sich und dem Führungsstück (95) ermöglicht.

## Revendications

1. Véhicule de type à selle comprenant :
un cadre de carrosserie (12) ;
un élément de connexion (33) qui est connecté au cadre de carrosserie (12) et qui supporte un arbre oscillant (26) s'étendant parallèlement à un axe (29) d'une roue arrière (WR) ;
une unité de puissance (27) de type oscillant qui comporte un carter (53) supportant un vilebrequin (52) de manière rotative autour d'un axe de rotation (Rx), le carter (53) étant formé d'un seul tenant avec un corps de palier (83) connecté de manière rotative à l'arbre oscillant (26) au-dessus de l'axe de rotation (Rx) du vilebrequin (52), l'unité de puissance (27) oscillant par rapport au cadre de carrosserie (12) ; et
une machine électrique rotative (65), qui est disposée dans une chambre de générateur (69) séparée d'une chambre de vilebrequin (61) et partiellement cloisonnée par le carter (53), génère une puissance électrique selon une rotation du vilebrequin (52), et entraîne le vilebrequin (52) selon une alimentation en un courant électrique,
dans lequel
le véhicule comprend en outre des faisceaux (47, 49) qui sont connectés à la machine électrique rotative (65) et sortant d'un côté avant ou d'un côté arrière du corps de palier (83) vers l'extérieur du carter (53), et
**caractérisé en ce que** les faisceaux (47, 49) sortent vers l'extérieur du carter (53) en pénétrant dans une pièce de guidage (95) connectée au corps de palier (83) depuis le côté avant ou le côté arrière.

2. Véhicule de type à selle selon la revendication 1, dans lequel
la pièce de guidage (95) est disposée sur une paroi extérieure du carter (53) entre le corps de palier (83) et un bloc-cylindres (55).

3. Véhicule de type à selle selon la revendication 2, dans lequel
la pièce de guidage (95) comporte :
un premier corps (95a) qui s'écarte le long d'une direction périphérique autour de l'axe de rotation (Rx) du vilebrequin (52) et supporte une première rondelle isolante (101) guidant au moins un fil conducteur des faisceaux (47, 49) ; et
un deuxième corps (95b) qui est plié à partir du premier corps (95a), s'écarte le long d'une surface d'accouplement (M) du carter (53) et du bloc-cylindres (55), et supporte une deuxième rondelle isolante (102) guidant au moins un fil conducteur des faisceaux (47, 49).

4. Véhicule de type à selle selon l'une quelconque des revendications 1 à 3, dans lequel
l'élément de connexion (33) comporte :
un corps latéral (35) s'étendant dans une direction parallèle à l'arbre oscillant (26) à une position espacée vers le haut de l'arbre oscillant (26) ; et
un corps sur le côté (36) s'étendant vers l'avant à partir du corps latéral (35) à une position espacée du corps de palier (83) dans une direction axiale de l'arbre oscillant (26), le corps sur le côté (36) étant connecté au cadre de carrosserie (12) de manière rotative autour d'un axe parallèle à l'arbre oscillant (26).

5. Véhicule de type à selle selon l'une quelconque des revendications 1 à 4, comprenant en outre :
un ventilateur de refroidissement (68) qui est disposé sur un rotor (66) de la machine électrique rotative (65) et a des pales (68a) produisant un flux d'air dans une direction centrifuge autour de l'axe de rotation (Rx) ; et
un élément de plaque (97) qui est disposé entre une paroi extérieure du carter (53) et le rotor (66), s'écarte le long d'un plan imaginaire orthogonal à l'axe de rotation (Rx) vers un côté extérieur d'une périphérie extérieure du ventilateur de refroidissement (68), et serre les faisceaux (47, 49) entre l'élément de plaque (97) et la paroi extérieure du carter (53).

6. Véhicule de type à selle selon l'une quelconque des revendications 1 à 5, dans lequel
l'unité de puissance (27) comprend en outre un couvercle de bloc-cylindres (73), qui est formé à un bord de celui-ci avec une découpe (105) qui permet un passage d'un des faisceaux (49) entre lui-même et la pièce de guidage (95).
